Europäisches Patentamt

European Patent Office

Office européen des brevets

(11) Veröffentlichungsnummer: **0 169 498**

**A2**

(12) # EUROPÄISCHE PATENTANMELDUNG

(21) Anmeldenummer: 85108954.0

(22) Anmeldetag: 17.07.85

(51) Int. Cl.⁴: **C 01 B 15/08**

(30) Priorität: 23.07.84 DE 3427119

(43) Veröffentlichungstag der Anmeldung:
29.01.86 Patentblatt 86/5

(84) Benannte Vertragsstaaten:
BE DE FR GB IT NL

(71) Anmelder: Peroxid-Chemie GmbH
Dr.-Gustav-Adolph-Strasse 2
D-8023 Höllriegelskreuth bei München(DE)

(72) Erfinder: Reh, Wolfgang
Mathildenstrasse 1
D-8033 Planegg(DE)

(72) Erfinder: Schelle, Siegfried, Dr.
Zweigstrasse 35d
D-8039 Puchheim(DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Postfach
860820
D-8000 München 86(DE)

(54) **Verfahren zur Herstellung von Kaliumpermonosulfat-Tripelsalz.**

(57) Es wird ein kontinuierliches Verfahren zur Herstellung des Tripelsalzes $2KHSO_5 \cdot KHSO_4 \cdot K_2SO_4$ beschrieben, das dadurch gekennzeichnet ist, daß man zur kontinuierlichen Herstellung eine wäßrige Arbeitslösung, welche $KHSO_5$, $H_2SO_4$ und $K_2SO_4$ im molaren Verhältnis von 1,3 bis 2,5 zu 1,2 bis 2,0 zu 1 enthält, in einer Verdampfungsanlage bei vermindertem Druck und einer Temperatur von höchstens 40°C bis auf eine Konzentration, die einem Gehalt von 20 bis 30 Gew.-% $KHSO_5$ entspricht, einengt, aus der konzentrierten Lösung einen Teilstrom entnimmt und daraus durch Kühlung auf eine Temperatur von unter 15°C das Tripelsalz ausfällt und abtrennt, die erhaltene Mutterlauge mit der restlichen Lösung verein t, durch Zugabe von 90- bis 100 %-iger $H_2SO_4$, 30- bis 90 %-igem $H_2O_2$ und konzentrierter KOH die Lösung rekonstituiert und wieder in die Verdampfungsanlage rezirkuliert. Nach dem erfindungsgemäßen Verfahren wird auf einfache und wirtschaftliche Weise ein Tripelsalz erhalten, das eine hohe Reinheit, insbesondere auch einen sehr geringen Gehalt an Kaliumperoxodisulfat (ca. 0,2 Gew.-%) aufweist.

./...

Die Salze der Peroxomonoschwefelsäure mit dem Anion $HSO_5^-$ besitzen große technische Bedeutung, z.B. als Bleichmittel für die Bleiche von natürlichen und synthetischen Fasern, in der Haarkosmetik zum Glätten oder Kräuseln der Haare, in der Lederherstellung, für Reinigungsmittel,z.B. für Zahnprothesen oder als Haushaltsreiniger, und insbesondere auch als Bestandteil moderner Waschmittel (vgl. z.B. DE-OS 32 46 260). Von den Salzen der Peroxomonoschwefelsäure sind allerdings nur wenige in kristallisierter Form gewonnen worden, weil bei der Kristallisation aus wäßriger Lösung durch Eindampfen mit erheblichen Verlusten durch Zersetzung zu rechnen ist. Die einfachen Alkalimetallsalze $NaHSO_5$ und $KHSO_5$ sind beim Stehen an der Luft hygroskopisch. An der Luft stabil ist das manchmal als "Caroat" bezeichnete Tripelsalz $2KHSO_5 \cdot KHSO_4 \cdot K_2SO_4$; dieses Salz ist deshalb das einzige Peroxomonosulfat, das großtechnisch hergestellt wird.

Zur Herstellung des Tripelsalzes $2KHSO_5 \cdot KHSO_4 \cdot K_2SO_4$ muß zunächst eine wäßrige Lösung der Komponenten $KHSO_5$, $KHSO_4$ und $K_2SO_4$ durch Umsetzung von Schwefelsäure, Wasserstoffperoxid und einem alkalischen Kaliumsalz, wie Kaliumhydroxid, Kaliumcarbonat oder Kaliumdicarbonat, in einem eng begrenzten Verhältnis der Komponenten hergestellt werden. Aus einer solchen Lösung läßt sich durch Eindampfen oder durch einfache Kristallisation und Filtration in der Regel nur eine unreine Form des Tripelsalzes erhalten; zur Herstellung des reinen Tripelsalzes ist eine fraktionierte Kristallisation erforderlich, was technisch aufwendig ist, zu Ausbeuteverlusten führt und in der Regel ein Batchverfahren erfordert, also schwierig kontinuierlich durchführbar ist(vgl. OE-PS 212 275, DE-PS 10 80 083, US-PS 30 41 139 ). Aufgabe der Erfindung war deshalb die Bereitstellung eines kontinuierlich durchführbaren Verfahrens zur Herstellung des Tripelsalzes $2KHSO_5 \cdot KHSO_4 \cdot K_2SO_4$, das einfach und auf wirtschaftliche Weise durchführbar ist und zu einem Tripelsalz mit einer Reinheit führt, die den Anforderungen der vorgesehenen Verwendungszwecke entspricht. Diese Aufgabe wird mit der vorliegenden Erfindung gelöst.

Gegenstand der Erfindung ist ein Verfahren zur Herstellung des Tripelsalzes $2KHSO_5 \cdot KHSO_4 \cdot K_2SO_4$ aus Schwefelsäure, Wasserstoffperoxid und Kalilauge, das dadurch gekennzeichnet ist, daß man zur kontinuierlichen Herstellung eine wäßrige Arbeitslösung, welche $KHSO_5$, $H_2SO_4$ und $K_2SO_4$ im molaren Verhältnis 1,3 bis 2,5/1,2 bis 2,0/1 enthält, in einer Verdampfungsanlage bei vermindertem Druck und einer Temperatur von höchstens 40°C bis auf eine Konzentration, die einem Gehalt von 20 bis 30 Gew.-% $KHSO_5$ entspricht, einengt, aus der konzentrierten Lösung einen Teilstrom entnimmt und daraus durch Kühlung auf eine Temperatur von unter 15°C das Tripelsalz ausfällt und abtrennt, die erhaltene Mutterlauge mit der restlichen Lösung vereint, durch Zugabe von 90 bis 100 %-iger $H_2SO_4$, 30- bis 90 %-igem $H_2O_2$ und konzentrierter KOH-Lösung rekonstituiert und wieder in die Verdampfungsanlage rezirkuliert.

Erfindungsgemäß läßt sich das Tripelsalz auf einfachem und kontinuierlichem Wege herstellen. Bei Einhaltung eines erfindungsgemäß verwendeten molaren Verhältnisses $KHSO_5/H_2SO_4/K_2SO_4$ von 1,3 bis 2,5/1,2 bis 2,0/1 fällt überraschenderweise gleich das Tripelsalz ohne vorhergehende Ausfällung von $K_2SO_4$ aus, während aus einer Arbeitslösung, die bereits die Zusammensetzung des Tripelsalzes aufweist, zunächst $K_2SO_4$ ausfällt, weshalb für die Herstellung des Tripelsalzes aus einer solchen Lösung das Wasser vollständig, z.B. mit Hilfe eines Sprühtrockners , entfernt werden muß. Nach dem erfindungsgemäßen Verfahren reicht es hingegen aus, nur wenig Wasser zu verdampfen, wodurch eine wesentliche Energieeinsparung ermöglicht wird und die Durchführung des Verfahrens kontinuierlich erfolgen kann.

Nach dem erfindungsgemäßen Verfahren ist es auch möglich, den in den üblichen Handelsprodukten vorhandenen nachteiligen Gehalt an ca. 3 % Peroxodisulfat zu vermeiden; ein solcher Gehalt an Peroxodisulfat ist insbesondere für die Verwendung des Tripelsalzes in kosmetischen Präparaten und Haushaltsreinigern nachteilig, weil das Peroxodisulfat, im Gegensatz zu reinem Kaliumperoxomonosulfat bzw. Tripelsalz, hautreizende Eigenschaften besitzt. Durch die Verwendung von 90- bis 100 %-iger Schwefelsäure anstelle von nach den bekannten Verfahren eingesetztem Oleum läßt sich dieser unerwünschte Gehalt von Peroxodisulfat vermeiden; ein nach dem erfindungsgemäßen Verfahren hergestelltes Tripelsalz enthält nur ca. 0,2 Gew.-% Kaliumperoxodisulfat.

Ein weiterer Vorteil der erfindungsgemäßen Verfahrensdurchführung besteht darin, daß der Verlust an aktivem Sauerstoff, d. h. also die Zersetzung der Persäure, auch bei kontinuierlicher Verfahrensführung verringert werden kann. Es wurde festgestellt, daß die Zersetzung der Persäure hauptsächlich durch Chloridionen verursacht wird, die in den Ausgangsstoffen, insbesondere der Kalilauge, vorhanden sind; bei einer kontinuierlichen Verfahrensdurchführung werden diese Chloride normalerweise angereichert, was zu einer zunehmenden Zersetzung der Persäure führt. Unter den erfindungsgemäßen Reaktionsbedingungen liegt das Chlorid infolge des großen Schwefelsäureüberschusses als Hydrochlorid vor und wird, nach teilweiser Oxidation zu Chlor durch die Caro'sche Säure in der Konzentrierungsstufe bei vermindertem Druck mit dem Wasser als Chlorwasserstoff und Chlor laufend soweit entfernt, daß die Zersetzung der Persäure (Abnahme des Aktivsauerstoffs) in einem annehmbaren Rahmen bleibt. Zusätzlich wird dies auch noch durch das erfindungsgemäße Arbeiten bei niedrigen Temperaturen begünstigt, während höhere Temperaturen die Zersetzung fördern.

Zur Rekonstitution der Lösung wird vorteilhafterweise eine Schwefelsäure mit einer Konzentration von mehr als 90 und weniger als 100 % verwendet, und insbesondere eine ca. 95-%-ige Schwefelsäure; man arbeitet mit einem 30- bis 90 %-igen, und insbesondere ca. 85 %-igen Wasserstoffperoxid, und mit konzentrierter Kalilauge, vorzugsweise mit 50 %-iger Kalilauge. Zweckmäßigerweise wird aus der Schwefelsäure und dem Wasserstoffperoxid zunächst die Caro'sche Säure, $H_2SO_5$, hergestellt, die dann zusammen mit der Kalilauge zur Arbeitslösung zugegeben wird.

Der Druck in der Verdampfungsanlage beträgt vorzugsweise weniger als 100 mbar und liegt insbesondere zwischen 25 und 2 mbar; die Temperatur in der Verdampfungsanlage beträgt höchstens 40°C und liegt vorzugsweise zwischen 30 und 15°C, insbesondere bei 20 bis 25°C.

Die Ausfällung des Tripelsalzes aus der Lösung beginnt bei einer Temperatur von ca. 15°C; die Kristalle fallen dabei jedoch in einer äußerst feinkristallinen mehligen Form an; eine gute Kristallisation unter Bildung leicht abtrennbarer Kristalle wird hingegen bei Temperaturen von 10°C und darunter erhalten. Die Ausfällung wird deshalb bevorzugt zwischen 10°C und -10°C durchgeführt, und insbesondere bei 5°C und darunter. Die Abtrennung der Kristalle kann auf für einen derartigen Verfahrensschritt übliche Weise erfolgen, z.B. durch Zentrifugieren oder Filtration.

Als Arbeitslösung wird vorzugsweise eine solche mit einem molaren Verhältnis $KHSO_5/H_2SO_4/K_2SO_4$ von 1,8 bis 2,2/1,4 bis 1,7/1 eingesetzt.

Das nachfolgende Beispiel erläutert die Erfindung näher, ohne sie darauf zu beschränken. Wenn nicht anders angegeben, beziehen sich die vorstehenden und nachfolgenden Prozentangaben

auf Gewichtsprozente.

B e i s p i e l

a) <u>Ausgangsmaterialien</u>

Als Rohstoffe dienen 95 %ige Schwefelsäure, 85%iges Wasserstoffperoxid und 50%ige Kalilauge.

6 kg/h $H_2O_2$ und 20 kg/h $H_2SO_4$ werden in einem kühlbaren Reaktionsgefäß (R) kontinuierlich zusammengemischt, so daß eine ca. 50%ige Caro'sche Säure (CS), $H_2SO_5$, entsteht, die außerdem noch $H_2SO_4$, $H_2O$ und $H_2O_2$ enthält.

b) <u>Produktionskreislauf</u>

Im Produktionskreislauf befinden sich ca. 1,5 m³ Arbeitslösung (AL) mit einem Gehalt von 25 bis 30 % $KHSO_5$ und jeweils ca. 15 % $H_2SO_4$ bzw. $K_2SO_4$ in wäßriger Lösung. 5 m³/h dieser Lösung, in die kontinuierlich die Caro'sche Säure (CS) (26 kg/h) und 50% KOH (27 kg/h) eingespeist werden, werden von einem Umlaufgefäß (UG) über eine Vakuumverdampfungsanlage bei ca. 25°C und 10 mbar gepumpt, um das mit den Rohstoffen zugeführte und bei der Neutralisation entstehende Wasser zu entfernen.

Etwa 0,2 m³/h der Arbeitslösung (AL) werden dem Kreislauf kontinuierlich entzogen und in einem kühlbaren 1 m³-Kristallisationsgefäß (KG) auf 5°C abgekühlt, wobei das Tripelsalz ausfällt.

c) <u>Abtrennung</u>

Die Kristallsuspension aus dem Kristallisationsgefäß (KG) wird über einer Zentrifuge (Z) getrennt. Das Filtrat (ca. 0,2 m³/h) wird ins Umlaufgefäß (UG) zurückgeführt und aufgefrischt. Der Filterkuchen wird in der Zentrifuge gewaschen, das feuchte Salz in einem Fließbett-Trockner getrocknet und über ein Silo der Abfüllung zugeführt.

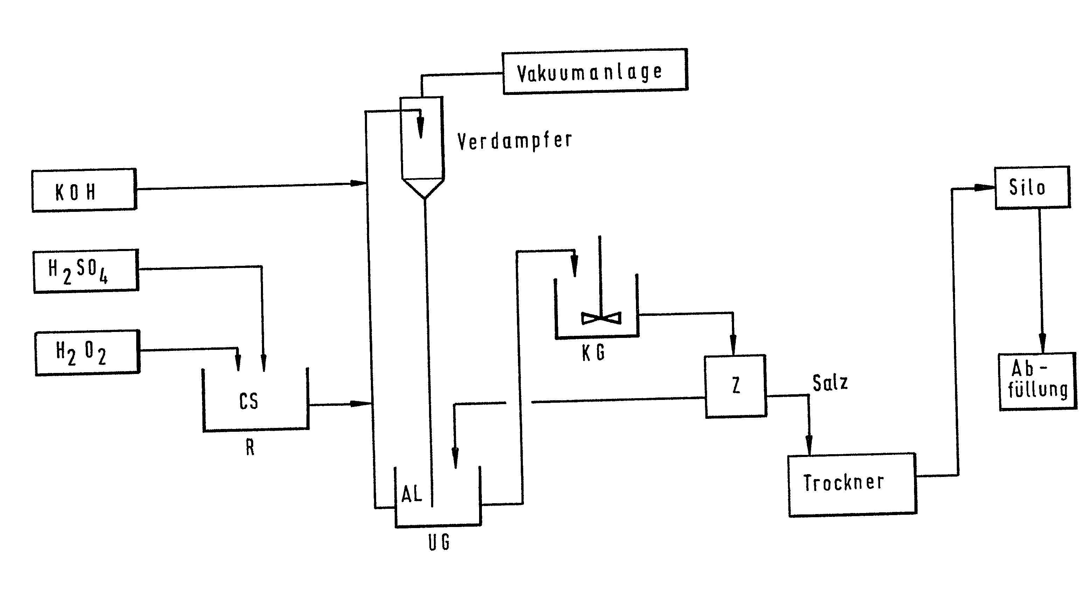

In der Fig. 1 ist der Verfahrensablauf schematisch dargestellt.

<u>Patentansprüche</u>

1. Verfahren zur Herstellung des Tripelsalzes $2KHSO_5$ x $KHSO_4$ x $K_2SO_4$ aus $H_2SO_4$, $H_2O_2$ und KOH, d a d u r c h   g e k e n n z e i c h n e t , daß man zur kontinuierlichen Herstellung eine wäßrige Arbeitslösung, welche $KHSO_5$, $H_2SO_4$ und $K_2SO_4$ im molaren Verhältnis von 1,3 bis 2,5 zu 1,2 bis 2,0 zu 1 enthält, in einer Verdampfungsanlage bei vermindertem Druck und einer Temperatur von höchstens 40°C bis auf eine Konzentration, die einem Gehalt von 20 bis 30 Gew.-% $KHSO_5$ entspricht, einengt, aus der konzentrierten Lösung einen Teilstrom entnimmt und daraus durch Kühlung auf eine Temperatur von unter 15°C das Tripelsalz ausfällt und abtrennt, die erhaltene Mutterlauge mit der restlichen Lösung vereint, durch Zugabe von 90 bis 100%iger $H_2SO_4$, 30 bis 90%igem $H_2O_2$ und konzentrierter KOH die Lösung rekonstituiert und wieder in die Verdampfungsanlage rezirkuliert.

2. Verfahren nach Anspruch 1,        d a d u r c h   g e k e n n z e i c h n e t ,        daß man in der Verdampfungsanlage einen Druck von weniger als 100mbar aufrechterhält.

3. Verfahren nach Anspruch 2,        d a d u r c h   g e k e n n z e i c h n e t ,        daß man in der Verdampfungsanlage einen Druck zwischen 25 und 2 mbar und eine Temperatur zwischen 30 und 15°C aufrechterhält.

4.  Verfahren nach einem der vorhergehenden Ansprüche,
    d a d u r c h    g e k e n n z e i c h n e t ,
    daß man in der Arbeitslösung ein molares Verhältnis
    von $KHSO_5$ zu $H_2SO_4$ und $K_2SO_4$ von 1,8 bis 2,2 zu
    1,4 bis 1,7 zu 1 einstellt.

5.  Verfahren nach einem der vorhergehenden Ansprüche,
    d a d u r c h    g e k e n n z e i c h n e t ,
    daß man das Tripelsalz bei einer Temperatur
    zwischen 10°C und -10°C ausfällt.

0169498